# EUROPEAN PATENT SPECIFICATION

(11) **EP 4 277 178 B1**
(45) Date of publication and mention of the grant of the patent: **09.09.2026**
(21) Application number: 21918474.4
(22) Date of filing: 14.01.2021
(51) Int. Cl.: H04L 1/16, H04L 1/18, H04W 72/12, H04L 1/1867

(54) **METHOD AND APPARATUS FOR DETERMINING APPLICABLE TIME OF MEDIA ACCESS CONTROL (MAC) SIGNALING**
VERFAHREN UND VORRICHTUNG ZUR BESTIMMUNG DER ANWENDBAREN ZEIT EINER MEDIENZUGANGSSTEUERUNGSSIGNALISIERUNG
PROCÉDÉ ET APPAREIL DE DÉTERMINATION D'UN TEMPS APPLICABLE D'UNE SIGNALISATION DE COMMANDE D'ACCÈS AU SUPPORT (MAC)

(43) Date of publication of application: 15.11.2023
(73) Proprietor: Huawei Technologies Co., Ltd., Shenzhen, Guangdong 518129 (CN)
(72) Inventor: SHEN, Zhongyi, Shenzhen, Guangdong 518129 (CN); ZHANG, Jiayin, Shenzhen, Guangdong 518129 (CN); ZHANG, Li, Shenzhen, Guangdong 518129 (CN)
(74) Representative: Maiwald GmbH
(86) International application number: PCT/CN2021/071921
(87) International publication number: WO 2022/151266

(56) References cited:
- EP-A1- 3 755 038
- EP-A1- 4 106 422
- CN-A- 103 687 019
- CN-A- 109 088 702
- CN-A- 110 121 906
- US-A1- 2019 052 416
- ERICSSON: "On timing relationship enhancements for NTN", vol. RAN WG1, no. e-Meeting; 20201026 - 20201113, 1 November 2020 (2020-11-01), XP052351018, Retrieved from the Internet <URL:https://ftp.3gpp.org/tsg_ran/WG1_RL1/TSGR1_103-e/Docs/R1-2009091.zip R1-2009091 On timing relationship enhancements for NTN.docx> [retrieved on 20201101]
- HUAWEI ET AL: "Remaining issue for beam management", vol. RAN WG1, no. Sanya, China; 20180416 - 20180420, 15 April 2018 (2018-04-15), XP051425933, Retrieved from the Internet <URL:http://www.3gpp.org/ftp/Meetings%5F3GPP%5FSYNC/RAN1/Docs/> [retrieved on 20180415]
- CATT: "Correction on timing for MAC CE applicability with HARQ-ACK repetition in 38.214", 3GPP DRAFT; R1-1910315 CORRECTION ON TIMING FOR MAC CE APPLICABILITY WITH HARQ-ACK REPETITION IN 38.214, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Chongqing, China; 20191014 - 20191020, 5 October 2019 (2019-10-05), Mobile Competence Centre ; 650, route des Lucioles ; F-06921 Sophia-Antipolis Cedex ; France , XP051789120

## Description

### TECHNICAL FIELD

This application relates to the field of communication technologies, and in particular, to a method for determining a time of applying media access control MAC signaling and an apparatus.

### BACKGROUND

EP3755038A1 describes that a user terminal includes a receiving section that receives information indicating start of report of semi-persistent channel state information (SP-CSI (Semi-Persistent Channel State Information) report), and a control section that determines timing of the SP-CSI report, based on whether or not there is relation between timing of a feedback report for reception of the information and the timing of the SP-CSI report.

EP4106422A1 describes that a terminal comprises: a wireless reception unit that receives a MAC CE and an offset value (KMAC_ACTION, etc.); and a control unit that, on the basis of the offset value, sets a slot for starting an operation based on a MAC CE control command.

Ericsson: "On tming relationship enhancements for NTN", 3GPP Draft, R1-2009091, 3rd Generation Partnership project (3GPP), e-Meeting, October 26th -November 13th, 2020, discusses issues of timing relationships for NTN.

In a communication system, a network device may notify, by using media access control (media access control, MAC) layer signaling carried on a physical downlink shared channel (physical downlink shared channel, PDSCH), a user terminal (user equipment, UE) of performing a specific process. A specific moment at which the UE applies the MAC signaling is closely related to a slot in which the UE sends hybrid automatic repeat request (hybrid automatic repeat request, HARQ) acknowledgment (acknowledgment, ACK) information of the PDSCH carrying the MAC signaling. For example, when the UE receives the MAC signaling carried on the PDSCH, the UE may apply the MAC signaling in a 1st slot after a slot ${k}_{1} + 3 {N}_{slot}^{subframe , μ}$ based on a slot k₁ in which the HARQ-ACK is sent and that is indicated in DCI for scheduling the PDSCH.

However, in the 3rd generation partnership project (3rd generation partnership project, 3GPP), NR-based access to unlicensed spectrum (NR-based access to unlicensed spectrum, NR-U) is introduced. In the NR-U, because an unlicensed spectrum is used, clear channel assessment (clear channel assessment, CCA) or listen before talk (listen before talk, LBT) needs to be performed on the spectrum before information on the spectrum is sent. After the CCA or the LBT succeeds, the information may be sent within a channel occupancy time (channel occupancy time, COT).

If the CCA or the LBT fails, the UE cannot send the information. In the NR-U, the UE cannot send the information due to a failure of the CCA or the LBT, and consequently cannot send the HARQ-ACK, therefore, related enhancement is performed on a HARQ process in the NR-U. The slot k₁ in which the HARQ-ACK is sent and that is indicated in the DCI may be configured as -1 in the NR-U, which indicates that the UE delays feedback of the HARQ. A specific HARQ feedback moment is determined by subsequent DCI.

Therefore, in the NR-U, for various types of MAC signaling carried on the PDSCH, if the slot k₁ in which the HARQ-ACK is sent and that is indicated in the DCI for scheduling the PDSCH is configured as -1, the UE cannot obtain a time of applying the MAC signaling through processing in an existing manner. Therefore, in this case, the time of applying the MAC signaling is unclear, and the network device and the UE have different understandings, which may affect performance and flexibility of the communication system.

### SUMMARY

This application provides a method for determining a time of applying media access control MAC signaling and an apparatus, to determine the time of applying the MAC signaling in an NR-U scenario.

Appended claim 1 defines a method for determining a time of applying media access control MAC signaling. Appended claim 6 defines a method for determining a time of applying media access control MAC signaling. Appended claim 8 defines a communication apparatus. The invention and its scope of protection is defined by these independent claims.

### BRIEF DESCRIPTION OF DRAWINGS

FIG. 1 shows a communication system applicable to a method for determining a time of applying MAC signaling according to an embodiment of this application;
FIG. 2 is an example flowchart of a method for determining a time of applying MAC signaling according to an embodiment of this application;
FIG. 3 is a schematic diagram of a scenario of a method for determining a time of applying MAC signaling according to an embodiment of this application;
FIG. 4 is a schematic diagram of a scenario of a method for determining a time of applying MAC signaling according to an embodiment of this application;
FIG. 5 is a schematic diagram of a communication apparatus according to an embodiment of this application;
FIG. 6 is a schematic diagram of a communication apparatus according to an embodiment of this application; and
FIG. 7 is a schematic diagram of a terminal device according to an embodiment of this application.

### DESCRIPTION OF EMBODIMENTS

The following explains terms in embodiments of this application.
(1) Time of applying MAC signaling: A time of applying MAC signaling is a time of applying a command indicated in the MAC signaling. For example, if the MAC signaling indicates that a SCell is activated, the time of applying the MAC signaling may be a time at which the SCell is activated. For another example, if the MAC signaling indicates that a semi-persistent channel state information (channel state information reference signal, CSI) physical uplink shared channel (physical uplink shared channel, PUSCH) reporting setting takes effect, the time of applying the MAC signaling may be a time at which the semi-persistent CSI PUSCH reporting setting takes effect.
(2) Applicable value: In an NR-U scenario, when a network device indicates that a first value for HARQ-ACK sending is configured as a value except -1, the first value may be considered as an applicable value.
(3) Inapplicable value: In an NR-U scenario, when a network device indicates that a first value for HARQ-ACK sending is configured as -1, -1 may be considered as an inapplicable value.
(4) The terms "system" and "network" may be interchangeably used in embodiments of this application. The term "a plurality of" means two or more, and another quantifier is similar to this. The term "and/or" describes an association relationship between associated objects and indicates that three relationships may exist. For example, A and/or B may indicate the following three cases: Only A exists, both A and B exist, and only B exists. In addition, an element (element) that appears in singular forms "a", "an", and "the" does not mean "one or only one" unless otherwise specified in the context, but means "one or more". For example, "a device" means one or more such devices. Further, "at least one of (at least one of)..." means one or any combination of subsequent associated objects. For example, "at least one of A, B, and C" includes A, B, C, AB, AC, BC, or ABC.

In an existing communication system, a network device may notify, by using media access control (media access control, MAC) layer signaling carried on a physical downlink shared channel (physical downlink shared channel, PDSCH), UE of performing a specific process.

For example, the network device may use the MAC signaling to activate a secondary cell (Secondary cell, SCell). A process may be as follows:

The UE receives an SCell activation command carried on the PDSCH in a slot (slot) n, and the UE may perform an operation applicable to SCell activation in a slot n+k. For example, the UE may start an SCell deactivation timer (deactivation timer) and report channel state information (channel state information) in the slot n+k. $k = {k}_{1} + 3 {N}_{slot}^{subframe , μ} + 1$, where k₁ is a slot (PDSCH-to-HARQ_feedback timing indicator) in which a hybrid automatic repeat request (hybrid automatic repeat request, HARQ) is sent and that is indicated in downlink control information (downlink control information, DCI) received by the UE. µ is a subcarrier spacing configuration, and ${N}_{slot}^{subframe , μ}$ is a number of slots per subframe when the subcarrier spacing configuration is µ. HARQ feedback may be sending HARQ acknowledgment information (acknowledgment, ACK) of the PDSCH.

For another example, the network device may alternatively use the MAC signaling carried on the PDSCH to activate or deactivate a semi-persistent channel state information reference signal (semi-persistent channel state information reference signal, SP CSI-RS). A process may be as follows:

If the UE receives an SP CSI-RS activation command, DCI indicates that the UE sends, in a slot n, a HARQ-ACK of the PDSCH carrying the SP CSI-RS activation command. The UE may consider that an SP CSI-RS configuration takes effect in a 1st slot after a slot $n + 3 {N}_{slot}^{subframe , μ}$ .

Similarly, for UE configured with a semi-persistent sounding reference signal (sounding reference signal, SRS) resource set, the network device may use an activation command carried on the PDSCH to activate the semi-persistent SRS resource set. DCI indicates that the UE may send a HARQ-ACK of the PDSCH in a slot n. The UE may consider that a configuration of the semi-persistent SRS resource set takes effect from a 1st slot after a slot $n + 3 {N}_{slot}^{subframe , μ}$.

In addition to the foregoing SCell activation or deactivation, SP CSI-RS activation or deactivation, and SP-SRS activation or deactivation, the network device may further notify, by using the MAC signaling carried on the PDSCH, the UE of performing aperiodic CSI-RS activation or deactivation, and transmission configuration indicator, TCI activation.

Currently, in descriptions of various types of MAC signaling carried on the PDSCH, a specific moment at which the UE applies the MAC signaling is closely related to a moment at which the UE sends the HARQ-ACK of the PDSCH carrying the MAC signaling. For example, when the UE receives the MAC signaling carried on the PDSCH, the UE may apply the MAC signaling in a 1st slot after a slot ${k}_{1} + 3 {N}_{slot}^{subframe , μ}$ based on a slot k₁ in which the HARQ-ACK is sent and that is indicated in DCI for scheduling the PDSCH.

However, in the 3rd generation partnership project (3rd generation partnership project, 3GPP), NR-based access to unlicensed spectrum (NR-based access to unlicensed spectrum, NR-U) is introduced. In the NR-U, because an unlicensed spectrum is used, clear channel assessment (clear channel assessment, CCA) or listen before talk (listen before talk, LBT) needs to be performed on the spectrum before information on the spectrum is sent. After the CCA or the LBT succeeds, the information may be sent within a channel occupancy time (channel occupancy time, COT).

If the CCA or the LBT fails, the UE cannot send the information. It is considered that in the NR-U, the UE cannot send the information due to a failure of the CCA or the LBT, and consequently cannot send the HARQ-ACK, therefore, related enhancement is performed on a HARQ process in the NR-U. The slot k₁ in which the HARQ-ACK is sent and that is indicated in the DCI may be configured as -1 in the NR-U, which indicates that the UE delays feedback of the HARQ. A specific HARQ feedback moment is determined by subsequent DCI.

Therefore, in the NR-U, for various types of MAC signaling carried on the PDSCH, if the slot k₁ in which the HARQ-ACK is sent and that is indicated in the DCI for scheduling the PDSCH is configured as -1, the UE cannot obtain a time of applying the MAC signaling through processing in an existing manner. Therefore, in this case, the time of applying the MAC signaling is unclear, and the network device and the UE have different understandings, which may affect performance and flexibility of the communication system.

Based on the foregoing problem, embodiments of this application provide a method for determining a time of applying MAC signaling. In this method, when a slot k₁ in which a HARQ-ACK of a PDSCH carrying the MAC signaling is sent is configured as an inapplicable value, for example, -1, a terminal device may determine the time of applying the MAC signaling based on the inapplicable value.

Technical solutions in embodiments of this application may be applied to various communication systems, for example, a long term evolution (long term evolution, LTE) system, a future 5th generation (5th Generation, 5G) system such as a new generation radio access technology (new radio access technology, NR), and a future communication system such as a 6G system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may alternatively be used.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

Embodiments of this application may be used in a conventional typical network or a future UE-centric (UE-centric) network. A non-cell (Non-cell) network architecture is introduced to the UE-centric network. To be specific, a large quantity of small cells are deployed in a specific area to form a hyper cell (Hyper cell). Each small cell is a transmission point (Transmission Point, TP) or a transmission reception point (Transmission Reception Point, TRP) of the hyper cell, and is connected to a centralized controller (controller). When UE moves in the hyper cell, a network side device selects a new sub-cluster (sub-cluster) for the UE to serve the UE. This avoids a real cell handover, and implements UE service continuity. The network side device includes a wireless network device. Alternatively, in the UE-centric network, a plurality of network side devices such as small cells may have independent controllers such as distributed controllers. Each small cell can independently schedule a user, and information is exchanged between small cells for a long time, so that the small cell can provide a coordinated service for the UE and have flexibly to some extent.

In embodiments of this application, an NR network scenario in a wireless communication network is used as an example to describe some scenarios. It should be noted that the solutions in embodiments of this application may be applied to another wireless communication network, and a corresponding name may also be replaced with a name of a corresponding function in the another wireless communication network.

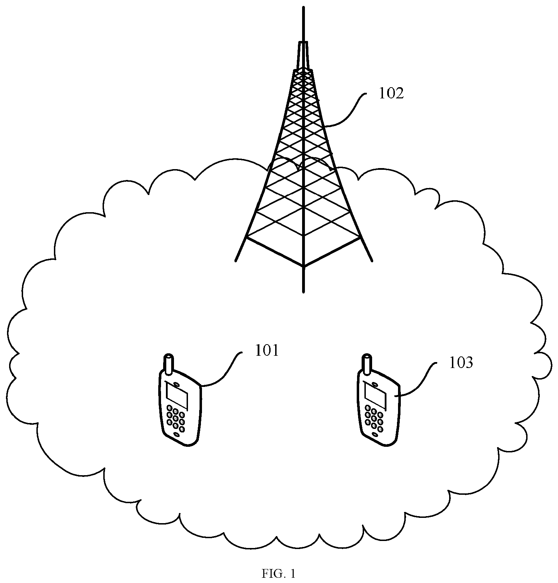

For ease of understanding embodiments of this application, a communication system shown in FIG. 1 is first used as an example to describe in detail a communication system to which embodiments of this application are applicable. FIG. 1 is a schematic diagram of the communication system applicable to a method for determining a time of applying MAC signaling according to an embodiment of this application. As shown in FIG. 1, a communication system 100 includes a terminal device 101 and a network device 102. A plurality of antennas may be configured for each of the terminal device 101 and the network device 102. Optionally, the communication system may further include a terminal device 103, and the terminal device 103 may also be configured with a plurality of antennas.

The terminal device in this application includes a device that provides a voice and/or data connectivity for a user. Specifically, the terminal device includes a device that provides a voice for the user, includes a device that provides data connectivity for the user, or includes a device that provides a voice and data connectivity for the user. For example, the terminal device may include a handheld device with a wireless connection function, or a processing device connected to a wireless modem. The terminal device may communicate with a core network through a radio access network (radio access network, RAN), and exchange a voice or data with the RAN, or exchange a voice and data with the RAN. The terminal device may include user equipment (user equipment, UE), a wireless terminal device, a mobile terminal device, a device-to-device (device-to-device, D2D) communication terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal) device, an access terminal (access terminal) device, a user terminal (user terminal) device, a user agent (user agent), or a user device (user device). For example, the terminal device may include a mobile phone (or referred to as a "cellular" phone), a computer with a mobile terminal device, or a portable, pocket-sized, handheld, or computer built-in mobile apparatus, for example, a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with relatively low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

As an example instead of a limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs).

In embodiments of this application, an apparatus configured to implement a function of the terminal device may be a terminal device, or may be an apparatus that can support the terminal device in implementing the function, for example, a chip system. The apparatus may be installed in the terminal device. In embodiments of this application, the chip system may include a chip, or may include a chip and another discrete component. The technical solutions provided in embodiments of this application are described by using an example in which the apparatus configured to implement the function of the terminal device is the terminal device.

The network device in this application includes, for example, an access network (access network, AN) device such as a base station (for example, an access point), and may be a device that is in an access network and that communicates with a wireless terminal device over an air interface through one or more cells. Alternatively, the network device is, for example, a road side unit (road side unit, RSU) in a vehicle-to-everything (vehicle-to-everything, V2X) technology. The base station may be configured to perform mutual conversion between a received over-the-air frame and an IP packet, and serve as a router between the terminal device and a remaining part of the access network. The remaining part of the access network may include an IP network. The RSU may be a fixed infrastructure entity supporting a V2X application, and may exchange a message with another entity supporting the V2X application. The network device may further coordinate attribute management of the air interface. For example, the network device may include an evolved NodeB (NodeB, eNB, or e-NodeB, evolved NodeB) in a long term evolution (long term evolution, LTE) system or a long term evolution-advanced (long term evolution-advanced, LTE-A) system, may include a next generation NodeB (next generation NodeB, gNB) in an evolved packet core (evolved packet core, EPC) network, a 5th generation (5th generation, 5G) mobile communication technology, or a new radio (new radio, NR) system (also referred to as an NR system for short), or may include a central unit (central unit, CU) and a distributed unit (distributed unit, DU) in a cloud access network (cloud radio access network, Cloud RAN) system. This is not limited in embodiments of this application.

In embodiments of this application, an apparatus configured to implement a function of the network device may be a network device, or may be an apparatus, for example, a chip system, that can support the network device in implementing the function. The apparatus may be installed in the network device. The technical solutions provided in embodiments of this application are described by using an example in which the apparatus configured to implement the function of the network device is the network device.

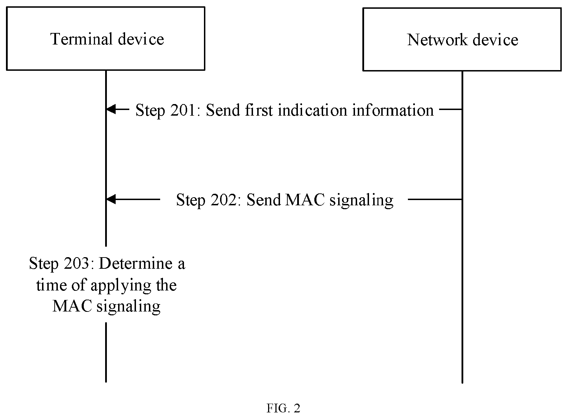

FIG. 2 is an example flowchart of a method for determining a time of applying MAC signaling according to an embodiment of this application. The method may include the following steps.

Step 201: A network device sends first indication information to a terminal device, and correspondingly, the terminal device receives the first indication information.

The first indication information herein may be DCI. The DCI may be used to schedule a PDSCH carrying the MAC signaling. The network device may indicate a time-frequency resource of the PDSCH in the DCI.

Alternatively, the network device may indicate, in the DCI, whether the terminal device delays feedback of a HARQ-ACK of the PDSCH. The DCI may carry a first value m for the terminal device to send the HARQ-ACK of the PDSCH. When m is an inapplicable value, for example, -1, m may indicate that the terminal device delays feedback of the HARQ-ACK of the PDSCH. When m is an applicable value, for example, 0, 1, 2, ..., m may indicate that the terminal device does not delay feedback of the HARQ-ACK. It should be noted that, when m is the applicable value, for example, 0, 1, 2, ..., m may indicate a time at which the terminal device sends the HARQ-ACK of the PDSCH.

Step 202: The network device sends the MAC signaling to the terminal device, and correspondingly, the terminal device receives the MAC signaling.

The terminal device may receive the PDSCH based on the time-frequency resource indicated in the DCI, to obtain the MAC signaling carried on the PDSCH. The MAC signaling may indicate the terminal device to perform a related operation.

Step 203: The terminal device determines the time of applying the MAC signaling.

The terminal device may determine the time of applying the MAC signaling based on the DCI. For example, when the first value indicates that the terminal device does not delay feedback of the HARQ-ACK, the terminal device may determine the time of applying the MAC signaling based on the first value. When the first value indicates that the terminal device delays feedback of the HARQ-ACK, the terminal device may determine the time of applying the MAC signaling in a manner provided in this embodiment of this application.

The following describes reception of the MAC signaling in step 202. Operations indicated by the MAC signaling include but are not limited to the following 1 to 19.

1: Indicate SCell activation.

The time of applying the MAC signaling may be a time at which the terminal device activates an SCell. The terminal device may report CSI and start an SCell deactivation timer (deactivation timer) based on the time of applying the MAC signaling. The terminal device may send, to a lower layer (lower layer) based on the time of applying the MAC signaling, indication information indicating the SCell activation.

2: Indicate SCell deactivation.

The time of applying the MAC signaling may be a time at which the SCell is deactivated. The terminal device may deactivate the SCell based on the time of applying the MAC signaling. The terminal device may send, to the lower layer (lower layer) based on the time of applying the MAC signaling, indication information indicating the SCell deactivation.

3: Indicate TCI activation.

The time of applying the MAC signaling may be a time at which the terminal device activates a TCI. The terminal device may activate the TCI based on the time of applying the MAC signaling. The terminal device may send, to the lower layer (lower layer) based on the time of applying the MAC signaling, indication information indicating the TCI activation.

4: Indicate TCI mapping activation.

The time of applying the MAC signaling may be an effective time at which the terminal device maps a TCI indication in the DCI to the TCI activated based on the MAC signaling. The terminal device may map, based on the time of applying the MAC signaling, the TCI indication in the DCI to the TCI activated based on the MAC signaling. The terminal device may send, to the lower layer (lower layer) based on the time of applying the MAC signaling, indication information indicating the TCI mapping activation.

5: Indicate to update a reference signal for path loss estimation of uplink power control.

The time of applying the MAC signaling may be a time at which the terminal device updates the reference signal for path loss estimation of uplink power control. The terminal device may perform path loss estimation based on the time of applying the MAC signaling and the reference signal indicated by the MAC signaling. The terminal device may send, to the lower layer (lower layer) based on the time of applying the MAC signaling, indication information indicating to update the reference signal for path loss estimation of uplink power control.

6: Indicate uplink spatial relation activation.

The time of applying the MAC signaling may be a time at which the terminal device activates an uplink spatial relation. The terminal device may activate the uplink spatial relation based on the time of applying the MAC signaling. The terminal device may send, to the lower layer (lower layer) based on the time of applying the MAC signaling, indication information indicating the uplink spatial relation activation.

7: Indicate the uplink spatial relation.

The time of applying the MAC signaling may be a time at which the uplink spatial relation and a spatial domain filter configuration that are used to transmit a PUCCH and that are indicated by the MAC signaling take effect. The terminal device may determine, based on the time of applying the MAC signaling, a time at which the uplink spatial relation takes effect and a time at which the spatial domain filter configuration (p0-PUCCH-value) of the PUCCH associated with the indicated uplink spatial relation takes effect. The terminal device may send, to the lower layer (lower layer) based on the time of applying the MAC signaling, indication information indicating the uplink spatial relation.

8: Indicate SP ZP CSI-RS resource set activation.

The time of applying the MAC signaling may be a time at which an activated ZP CSI-RS resource in an SP ZP CSI-RS resource is mapped to a PDSCH RE. The terminal device may map, based on the time of applying the MAC signaling, the ZP CSI-RS activated based on an indication of the MAC signaling in the SP ZP CSI-RS resource set, to the PDSCH RE. The terminal device may send, to the lower layer (lower layer) based on the time of applying the MAC signaling, indication information indicating the SP ZP CSI-RS resource set activation.

9: Indicate SP ZP CSI-RS resource set deactivation.

The time of applying the MAC signaling may be a cessation time at which a deactivated ZP CSI-RS resource in the SP ZP CSI-RS resource set is mapped to the PDSCH RE. The terminal device may stop, based on the time of applying the MAC signaling, mapping from the ZP CSI-RS deactivated based on an indication of MAC signaling in the SP ZP CSI-RS resource set to the PDSCH RE. The terminal device may send, to the lower layer (lower layer) based on the time of applying the MAC signaling, indication information indicating the SP ZP CSI-RS resource set deactivation.

10: Indicate aperiodic CSI-RS trigger state selection.

The time of applying the MAC signaling may be a time at which the terminal device selects an aperiodic CSI-RS trigger state. The network device may indicate trigger states of one or more aperiodic CSI-RSs to the terminal device, and the terminal device may determine, based on the time of applying the MAC signaling, an effective time at which a CSI trigger state indicated in the DCI is mapped to a CSI trigger state selected based on the MAC signaling. The terminal device may send, to the lower layer (lower layer) based on the time of applying the MAC signaling, indication information indicating the aperiodic CSI-RS trigger state selection.

11: Indicate that a semi-persistent CSI PUSCH reporting setting takes effect.

The time of applying the MAC signaling may be a time at which the semi-persistent CSI PUSCH reporting setting of the terminal device takes effect. The terminal device may report semi-persistent CSI to the network device based on the reporting setting. The terminal device may send, to the lower layer (lower layer) based on the time of applying the MAC signaling, indication information indicating that the semi-persistent CSI PUSCH reporting setting takes effect.

12: Indicate semi-persistent CSI-RS/CSI interference measurement (interference measurement, IM) resource set activation.

The time of applying the MAC signaling may be a time at which a semi-persistent CSI-RS/CSI-IM resource set is activated. The terminal device may determine, based on the time of applying the MAC signaling, that QCL assumption indicated by the MAC signaling takes effect, and determine that configuration information of the semi-persistent CSI-RS/IM resource set takes effect. The terminal device may receive a semi-persistent CSI-RS/CSI-IM resource based on the configuration information of the semi-persistent CSI-RS/IM resource set. The terminal device may send, to the lower layer (lower layer) based on the time of applying the MAC signaling, indication information indicating the semi-persistent CSI-RS/CSI-IM resource set activation.

13: Indicate semi-persistent CSI-RS/CSI-IM resource set deactivation.

The time of applying the MAC signaling may be a time at which the semi-persistent CSI-RS/CSI-IM resource set is deactivated. The terminal device may stop receiving the semi-persistent CSI-RS/CSI-IM resource based on the time of applying the MAC signaling. The terminal device may send, to the lower layer (lower layer) based on the time of applying the MAC signaling, indication information indicating the semi-persistent CSI-RS/CSI-IM resource set deactivation.

14: Indicate that a semi-persistent CSI reporting setting takes effect.

The time of applying the MAC signaling may be a time at which the semi-persistent CSI reporting setting takes effect. The terminal device may report the semi-persistent CSI to the network device based on the semi-persistent CSI reporting setting. The terminal device may send, to the lower layer (lower layer) based on the time of applying the MAC signaling, indication information indicating that the semi-persistent CSI reporting setting takes effect.

15: Indicate semi-persistent SRS resource set activation.

The time of applying the MAC signaling may be a time at which a semi-persistent SRS resource set is activated. The terminal device may determine, based on the time of applying the MAC signaling, that configuration information of the semi-persistent SRS resource set takes effect, and the terminal device may send a semi-persistent SRS based on the configuration information of the semi-persistent SRS resource set. The terminal device may send, to the lower layer (lower layer) based on the time of applying the MAC signaling, indication information indicating the semi-persistent SRS resource set activation.

16: Indicate semi-persistent SRS resource set deactivation.

The time of applying the MAC signaling may be a time at which the semi-persistent SRS resource set is deactivated. The terminal device may stop sending the semi-persistent SRS based on the time of applying the MAC signaling. The terminal device may send, to the lower layer (lower layer) based on the time of applying the MAC signaling, indication information indicating semi-persistent SRS resource set deactivation.

17: Indicate that semi-persistent SRS resource set transmission assumption takes effect.

The time of applying the MAC signaling may be a time at which the semi-persistent SRS resource set transmission assumption takes effect. The terminal device may use the indicated semi-persistent SRS resource set transmission assumption based on the time of applying the MAC signaling. The terminal device may send, to the lower layer (lower layer) based on the time of applying the MAC signaling, indication information indicating that the semi-persistent SRS resource set transmission assumption takes effect.

18: Indicate that semi-persistent SRS resource set transmission cessation assumption takes effect.

The time of applying the MAC signaling may be a time at which the semi-persistent SRS resource set transmission cessation assumption takes effect. The terminal device may stop sending the semi-persistent SRS based on the time of applying the MAC signaling. The terminal device may send, to the lower layer (lower layer) based on the time of applying the MAC signaling, indication information indicating that the semi-persistent SRS resource set transmission cessation assumption takes effect.

19: Indicate that an SRS resource spatial relation update command takes effect.

The time of applying the MAC signaling may be a time at which the SRS resource spatial relation update command takes effect. The terminal device may update an SRS resource spatial relation based on the time of applying the MAC signaling. The terminal device may send, to the lower layer (lower layer) based on the time of applying the MAC signaling, indication information indicating that the SRS resource spatial relation update command takes effect.

The following describes the method in which the terminal device determines the time of applying the MAC signaling in step 203.

In a possible implementation, after receiving the PDSCH carrying the MAC signaling, the terminal device may determine whether to delay feedback of the HARQ-ACK of the PDSCH. The DCI includes the first value. When the first value is configured as 0, 1, 2, ..., the terminal device may determine not to delay feedback of the HARQ-ACK. The terminal device may determine the time of applying the MAC signaling based on a value of m. Optionally, the terminal device may determine, based on the value of m, a time at which the HARQ-ACK is sent.

For example, the network device may schedule the PDSCH by using the DCI, where the DCI carries the first value m for the terminal device to send the HARQ-ACK. The network device sends the PDSCH to the terminal device, where the PDSCH carries the MAC signaling. The MAC signaling indicates the terminal device to activate the SCell. The terminal device may determine that the MAC signaling is applicable in a slot $a + m + 3 {N}_{slot}^{subframe , μ} + 1$, or the terminal device may determine that the operation indicated by the MAC signaling is applicable in a slot $a + m + {3 N}_{slot}^{subframe , μ} + 1$. The terminal device may determine to start the SCell deactivation timer in the slot $a + m + {3 N}_{slot}^{subframe , μ} + 1$.

Optionally, the terminal device may send the HARQ-ACK in a slot a+m.

In another possible implementation, if the first value m for HARQ-ACK sending in the DCI is configured as an inapplicable value, for example, -1, the terminal device delays sending of the HARQ-ACK. However, the terminal device cannot accurately determine the time of applying the MAC signaling according to the foregoing method.

In an example, the terminal device does not expect that the first value in the DCI is configured as an inapplicable value such as -1. The first value in the DCI sent by the network device to the terminal device cannot be configured as an inapplicable value such as -1, in other words, the first value in the DCI indicates that the terminal device does not delay feedback of the HARQ-ACK. Therefore, each first value in the DCI sent by the network device to the terminal device is configured as an applicable value, and the first value may alternatively indicate the time at which the terminal device sends the HARQ-ACK. The terminal device may determine the time of applying the MAC signaling based on the first value.

Based on the foregoing solution, it may be predefined that the first value for HARQ-ACK sending in the DCI sent by the network device to the terminal device is not configured as an inapplicable value. Therefore, the terminal device and the network device may determine the time of applying the MAC signaling based on the first value. The network device and the terminal device may have consistent understandings of the time of applying the MAC signaling.

In another example, if the first value in the DCI indicates that the terminal device delays feedback and sending of the HARQ-ACK, the terminal device may determine the time of applying the MAC signaling in the following manner 1 to manner 4. The following separately describes the manner 1 to the manner 4.

Manner 1: The terminal device determines the time of applying the MAC signaling based on a second value.

The second value herein may be specified in a communication protocol, or may be indicated by the network device. The second value is related to at least one of a subcarrier spacing of the PDSCH carrying the MAC signaling and a processing capability of the terminal device for the PDSCH.

In a possible implementation, the second value may be determined based on the processing capability of the terminal device for the PDSCH. A 1st slot in which the terminal device is capable of sending the HARQ-ACK of the PDSCH may be determined based on the processing capability of the terminal device for the PDSCH. The second value may indicate the 1st slot, or indicate a slot after the 1st slot. Herein, a slot in which the terminal device is capable of sending the HARQ-ACK of the PDSCH may mean that if the terminal device needs to send the HARQ-ACK of the PDSCH, the terminal device may start to send the HARQ-ACK in the slot. However, because the first value indicates that the terminal device delays feedback of the HARQ-ACK, the terminal device does not send the HARQ-ACK this time.

Refer to the descriptions in section 5.3 of the standard 3GPP TS 38.214.V16.3.0 (2020-09). The 1st slot in which the terminal device is capable of sending the HARQ-ACK of the PDSCH should not be earlier than a time-domain symbol L1. The time-domain symbol L1 may be a 1st uplink symbol after an interval T of a last time-domain symbol of the PDSCH. Optionally, CP of L1 needs to be considered for the 1st uplink symbol herein. $T = \left(N1+{d}_{1 , 1}+{d}_{2}\right) \left(2048+144\right) ⋅ κ ⋅ {2}^{- μ} ⋅ {T}_{c} + Text :$

In the foregoing formula, N1 is a PDSCH decoding time determined by a subcarrier spacing configuration µ. N1 is in a unit of a time-domain symbol. Tc is a unit of time. Tc may be determined according to the following formula: ${T}_{c} = \frac{1}{{Δf}_{mac}} ⋅ {N}_{f}$

Δfₘₐₓ = 480 · 10³ Hz, and N_{f}=4096. Text may be understood as a time related to cyclic prefix (cyclic prefix, CP) extension (extension). d_{1,1} is specified in the communication protocol, and may be determined based on the processing capability for the PDSCH, a PDSCH mapping type, a PDSCH symbol location, and a location relationship between the PDSCH and a control-resource set (control-resource set, CORESET). d₂ is a value reported by the terminal device when the PUCCH has a high priority, and the PUCCH coincides with a PUCCH or a PUSCH having a low priority. In other cases, d₂=0.

A faster or stronger processing capability of the terminal device for the PDSCH indicates an earlier determined slot in which the terminal device is capable of sending the HARQ-ACK. Therefore, the second value may be smaller. A slower or weaker processing capability of the terminal device for the PDSCH indicates a later determined slot in which the terminal device is capable of sending the HARQ-ACK. Therefore, the second value may be larger.

In another possible implementation, the second value may be determined based on the subcarrier spacing of the PDSCH. A larger subcarrier spacing of the PDSCH indicates a larger number of slots at the current subcarrier spacing. Therefore, the second value may be larger. A smaller subcarrier spacing of the PDSCH indicates a smaller number of slots at the current subcarrier spacing. Therefore, the second value may be smaller.

Based on the foregoing reasons, a correspondence between the second value and the processing capability of the terminal device for the PDSCH may be preset. Alternatively, a correspondence between the second value and the subcarrier spacing of the PDSCH may be preset. Alternatively, a three-way relationship between the second value, the processing capability of the terminal device for the PDSCH, and the subcarrier spacing of the PDSCH may be preset. The terminal device may determine the second value based on the processing capability of the terminal device for the PDSCH and/or the subcarrier spacing of the PDSCH, and then determine the time of applying the MAC signaling.

Optionally, the second value may be related to other information. This is not specifically limited in this application.

In this embodiment of this application, each terminal device may determine a second value based on a processing capability of the terminal device for the PDSCH and/or the subcarrier spacing of the PDSCH. Alternatively, when the first value in the DCI indicates to delay feedback of the HARQ-ACK, all terminal devices may use a same second value.

In an example, the terminal device may replace the first value with the second value and determine, in a manner specified in the communication protocol, the time of applying the MAC signaling. For example, when the UE receives the SP CSI-RS activation command, and m in the DCI indication indicates that the terminal device delays feedback of the HARQ-ACK, the terminal device may consider that the SP CSI-RS configuration takes effect in the 1st slot after $X + {3 N}_{slot}^{subframe , μ}$. X is the second value.

In another example, the second value may indicate the time of applying the MAC signaling. The terminal device may determine the time of applying the MAC signaling based on the second value. For example, when the terminal device receives the SP CSI-RS activation command, and m in the DCI indication indicates that the terminal device delays feedback of the HARQ-ACK, the terminal device may consider that the SP CSI-RS configuration takes effect in the slot indicated by the second value.

Based on the foregoing solution, the terminal device may determine the processing capability of the terminal device for the PDSCH, and the terminal device may further determine the subcarrier spacing of the PDSCH. Therefore, if the first value in the DCI received by the terminal device indicates that feedback of the HARQ-ACK is delayed, the terminal device may determine the second value based on the processing capability of the terminal device for the PDSCH and/or the subcarrier spacing of the PDSCH, and then determine the time of applying the MAC signaling.

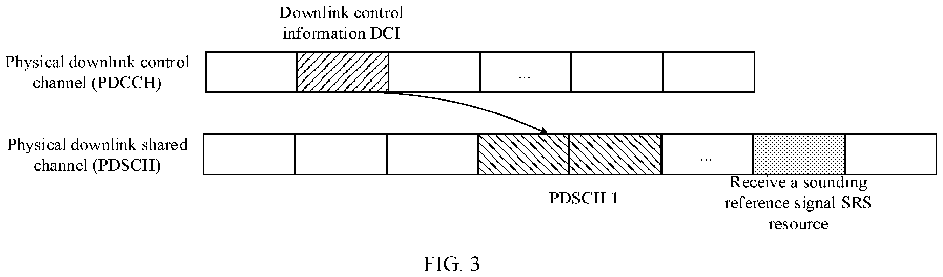

The manner 1 provided in this embodiment of this application is described below with reference to FIG. 3.

Refer to FIG. 3. The terminal device receives DCI 1 from the network device, where the DCI 1 is used to schedule a PDSCH 1 carrying MAC 1. The terminal device receives the PDSCH 1 from the network device in a slot a indicated by the DCI 1, to obtain the MAC 1. A first value m in the DCI 1 indicates that the terminal device delays sending of the HARQ-ACK. The MAC 1 indicates the terminal device to activate the SCell. The terminal device may receive the PDSCH 1 based on a time-frequency resource indicated by the DCI 1, to obtain the MAC 1. The terminal device may determine a second value b, and then determine to start the SCell deactivation timer in a slot $b + {3 N}_{slot}^{subframe , μ} + 1$. Alternatively, the terminal device may determine to start the SCell deactivation timer in a slot b. Optionally, the terminal device may start the SCell deactivation timer in any slot after the slot $b + {3 N}_{slot}^{subframe , μ} + 1$ or in any slot after the slot b.

Optionally, because the first value in the DCI indicates that the terminal device delays feedback of the HARQ-ACK, the terminal device may send a HARQ-ACK of the PDSCH 1 based on subsequently received DCI. For example, the terminal device receives DCI 2 from the network device, where the DCI 2 is used to schedule a PDSCH 2. The DCI 2 may be used to determine a slot in which a HARQ-ACK of the PDSCH 1 is sent.

Manner 2: The terminal device determines the time of applying the MAC signaling based on a third value indicated by the network device.

The third value herein may be indicated together with the MAC signaling. In an example, the network device may indicate the third value in the MAC signaling. For example, the network device may add the third value to the MAC signaling, or the network device may use a bit sequence to indicate the third value in the MAC signaling. A relationship between a value of the bit sequence and the third value may be sent by the network device to the terminal device, or may be specified in the communication protocol. Alternatively, the network device may indicate the third value by using an identifier in the MAC signaling. A relationship between the identifier and the third value may be sent by the network device to the terminal device, or may be specified in the communication protocol.

Optionally, the third value may be indicated separately from the MAC signaling. In an example, the network device may indicate the third value in the DCI. For a manner of indicating the third value in the DCI, refer to the foregoing manner of indicating the third value in the MAC signaling. Details are not described herein again.

In another example, the network device may indicate the third value to the terminal device by using a radio resource control (radio resource control, RRC) message, for example, an RRC reconfiguration (RRC Reconfiguration) message, an RRC setup (RRC Setup) message, or an RRC reestablishment (RRC Reestablishment) message. The network device may simultaneously send the RRC message that carries the third value and the MAC signaling, or may send the RRC message that carries the third value before sending the MAC signaling, or may send the MAC signaling before sending the RRC message that carries the third value.

For example, the network device may indicate, to the terminal device by using the third value in the RRC message in an initial access process of the terminal device, that if the first value in the DCI indicates that feedback of the HARQ-ACK is delayed, the terminal device may determine the time of applying the MAC signaling based on the third value.

In an example, the terminal device may replace the first value with the third value and determine, in the manner specified in the communication protocol, the time of applying the MAC signaling. For example, when the UE receives the SP CSI-RS activation command, and m in the DCI indication indicates that the terminal device delays feedback of the HARQ-ACK, the terminal device may consider that the SP CSI-RS configuration takes effect in a 1st slot after $X + {3 N}_{slot}^{subframe , μ}$. X is the third value.

In another example, the third value may indicate the time of applying the MAC signaling. The terminal device may determine the time of applying the MAC signaling based on the third value. For example, when the terminal device receives the SP CSI-RS activation command, and m in the DCI indication indicates that the terminal device delays feedback of the HARQ-ACK, the terminal device may consider that the SP CSI-RS configuration takes effect in a slot indicated by the third value.

It should be noted that the third value indicated by the network device may be determined in the manner of determining the second value in the manner 1. For example, the network device may determine the third value based on the processing capability of the terminal device for the PDSCH and/or the subcarrier spacing of the PDSCH. A difference between the third value and the second value lies in that the network device configures the third value for the terminal device more flexibly, and communication data currently processed by the network device and the terminal device may be fully considered.

Based on the foregoing solution, when the first value in the DCI indicates that the terminal device delays feedback of the HARQ-ACK, the network device may send the third value to the terminal device, so that the terminal device determines the time of applying the MAC signaling, and the terminal device performs, at the time of application, the related operation indicated by the MAC signaling. The network device and the terminal device may have the consistent understandings of the time of applying the MAC signaling, thereby further improving flexibility of a communication system.

The manner 2 provided in this embodiment of this application is described below with reference to FIG. 3.

The terminal device receives a third value p from the network device in a random access process. The terminal device receives the DCI 1 from the network device, where the DCI 1 is used to schedule the PDSCH 1 carrying the MAC 1. The terminal device receives the PDSCH 1 from the network device in a slot n indicated by the DCI 1, to obtain the MAC 1. The MAC 1 indicates the terminal device to activate the SCell. The terminal device may receive the MAC 1 based on the time-frequency resource indicated by the DCI 1. The first value in the DCI 1 indicates that the terminal device delays feedback of the HARQ-ACK. The terminal device may start the SCell deactivation timer in a slot $p + {3 N}_{slot}^{subframe , μ} + 1$. Alternatively, the terminal device may start the SCell deactivation timer in a slot p. Optionally, the terminal device may start the SCell deactivation timer in any slot after the slot $p + {3 N}_{slot}^{subframe , μ} + 1$ or in any slot after the slot p.

Optionally, because the first value in the DCI 1 indicates that the terminal device delays feedback of the HARQ-ACK, the terminal device may determine to delay feedback of the HARQ-ACK of the PDSCH 1 this time. The terminal device may feed back the HARQ-ACK of the PDSCH 1 based on the subsequently received DCI. For example, the terminal device receives the DCI 2 from the network device, where the DCI 2 is used to schedule the PDSCH 2. The DCI 2 may be used to determine the slot in which the HARQ-ACK of the PDSCH 1 is sent.

Manner 3: The terminal device determines the time of applying the MAC signaling based on the processing capability for the PDSCH.

In a possible implementation, a first slot in which the terminal device is capable of sending the HARQ-ACK of the PDSCH may be determined based on the processing capability of the terminal device for the PDSCH. The first slot may be a 1st slot in which the terminal device is capable of sending the HARQ-ACK of the PDSCH. The terminal device may determine the time of applying the MAC signaling based on the first slot or a slot after the first slot. Whether the terminal device determines the time of applying the MAC signaling based on the first slot or the slot after the first slot may be specified in the communication protocol, or may be indicated by the network device. Optionally, the terminal device determines the time of applying the MAC signaling based on a specific slot after the first slot may be specified in the communication protocol, or may be indicated by the network device. For example, the communication protocol may specify or the network device may indicate an offset k, where the offset k may be an offset of a slot after the first slot relative to the first slot, and k is an integer greater than or equal to 0. The terminal device may determine the time of applying the MAC signaling based on the first slot determined based on the processing capability for the PDSCH and the offset k.

The 1st slot in which the terminal device is capable of sending the HARQ-ACK of the PDSCH may mean that if the terminal device needs to send the HARQ-ACK of the PDSCH, the terminal device may start to send the HARQ-ACK in the slot. However, because the first value indicates that the terminal device delays feedback of the HARQ-ACK, the terminal device does not send the HARQ-ACK this time.

Refer to the descriptions in section 5.3 of the standard 3GPP TS 38.214.V16.3.0 (2020-09). The slot in which the terminal device is capable of sending the HARQ-ACK of the PDSCH should not be earlier than the time domain symbol L1. The time-domain symbol L1 may be the 1st symbol after the interval T of the last time-domain symbol of the PDSCH. Optionally, the CP of L1 needs to be considered for the 1st uplink symbol herein. $T = \left(N1+{d}_{1 , 1}+{d}_{2}\right) \left(2048+144\right) ⋅ κ ⋅ {2}^{- μ} ⋅ {T}_{c} + Text .$

In the foregoing formula, N1 is the PDSCH decoding time determined by a subcarrier spacing configuration µ. N1 is in the unit of the time-domain symbol. Tc is the unit of time. Tc may be determined according to the following formula: ${T}_{c} = \frac{1}{{Δf}_{mac}} ⋅ {N}_{f}$

Δfₘₐₓ = 480 · 10³ Hz, and N_{f}=4096. Text may be understood as the time related to cyclic prefix (cyclic prefix, CP) extension (extension). D_{1,1} is specified in the communication protocol, and may be determined based on the processing capability for the PDSCH, the PDSCH mapping type, the PDSCH symbol location, and the location relationship between the PDSCH and the control-resource set (control-resource set, CORESET). d₂ is the value reported by the terminal device when the PUCCH has the high priority, and the PUCCH coincides with the PUCCH or the PUSCH having the low priority. In other cases, d₂=0.

The terminal device may determine the first slot based on the foregoing method, and then determine the time of applying the MAC signaling. For example, the first value in the DCI may be replaced with the first slot, and the time of applying the MAC signaling may be determined by using a formula specified in the communication protocol. Alternatively, the first value in the DCI may be replaced with the slot after the first slot, and the time of applying the MAC signaling may be determined by using a formula specified in the communication protocol.

Based on the foregoing solution, the terminal device may determine, based on the processing capability of the terminal device for the PDSCH, the slot in which the terminal device is capable of sending the HARQ-ACK of the PDSCH, and then determine the time of applying the MAC signaling. The network device and the terminal device may determine the same time of applying the MAC signaling, and align understandings of the time of applying the MAC signaling, thereby saving transmission resources.

The manner 3 provided in this embodiment of this application is described below with reference to FIG. 3.

The terminal device receives the DCI 1 from the network device, where the DCI 1 is used to schedule the PDSCH 1 carrying the MAC 1. The terminal device receives the PDSCH 1 from the network device in a slot 1 indicated by the DCI 1, to obtain the MAC 1. The MAC 1 indicates the terminal device to activate the SCell. The terminal device may receive the MAC 1 based on the time-frequency resource indicated by the DCI 1. The first value in the DCI 1 indicates that the terminal device delays feedback of the HARQ-ACK. The terminal device may determine that the slot in which the terminal device is capable of sending the HARQ-ACK of the PDSCH 1 is a slot 4. Therefore, the terminal device may start the SCell deactivation timer in a slot $4 + 3 {N}_{slot}^{subframe , μ} + 1$. Optionally, the communication protocol specifies that an offset between the time of applying the MAC signaling and the slot in which the terminal device is capable of sending the HARQ-ACK of the PDSCH is k, where k is an integer greater than 0. The terminal device may start the SCell deactivation timer in a slot $4 + k + 3 {N}_{slot}^{subframe , μ} + 1$ based on the slot 4 in which the terminal device is capable of sending the PDSCH 1 and the offset k.

Optionally, because the first value in the DCI 1 indicates that the terminal device delays feedback of the HARQ-ACK, the terminal device may determine to delay feedback of the HARQ-ACK of the PDSCH 1. The terminal device may feed back the HARQ-ACK of the PDSCH 1 based on the subsequently received DCI. For example, the terminal device receives the DCI 2 from the network device, where the DCI 2 is used to schedule the PDSCH 2. The DCI 2 may be used to determine the slot in which the HARQ-ACK of the PDSCH 1 is sent.

Manner 4: The terminal device determines the time of applying the MAC signaling based on third indication information.

If the first value in the DCI for scheduling the PDSCH carrying the MAC signaling indicates that the terminal device delays feedback of the HARQ-ACK, the terminal device may not perform the related operation indicated by the MAC signaling, and wait for subsequent DCI. The subsequent DCI and the foregoing DCI for scheduling the PDSCH carrying the MAC signaling may be DCI after the DCI for scheduling the PDSCH carrying the MAC signaling.

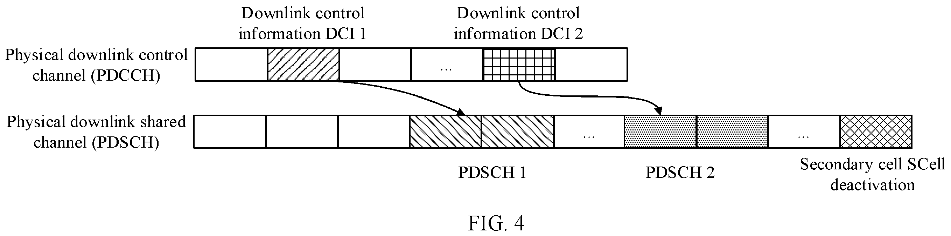

Refer to FIG. 4. The network device schedules, by using DCI 1, a PDSCH 1 carrying MAC 1, and the terminal device obtains the MAC 1 based on the PDSCH 1 received based on the DCI 1 in a slot a. The MAC 1 indicates that the terminal device to deactivate the SCell. Because a first value in the DCI 1 indicates that the terminal device to delay feedback of a HARQ-ACK, the terminal device may temporarily not determine an SCell deactivation time until the terminal device receives a next piece of DCI. For example, the network device schedules a PDSCH 2 by using DCI 2. A first value in the DCI 2 indicates that the terminal device does not delay feedback of the HARQ-ACK. Therefore, the terminal device may determine, based on the first value in the DCI 2, the SCell deactivation time.

Based on the foregoing solution, when the first value in the DCI for scheduling the PDSCH carrying the MAC signaling indicates that the terminal device delays feedback of the HARQ-ACK, the terminal device may temporarily not perform the operation related to the MAC signaling, and wait for subsequent DCI. The terminal device may determine the time of applying the foregoing MAC signaling based on the subsequent DCI.

In addition, it should be noted that, because understandings of the network device and the terminal device on the time of applying the MAC signaling need to be aligned, the network device may also determine the time of applying the MAC signaling in the foregoing manner 1 to manner 4. A manner used by the network device should be the same as a manner used by the terminal device.

The terminal device may perform, at the determined time of applying the MAC signaling, an operation indicated by the MAC signaling. For example, when the MAC signaling indicates that the aperiodic CSI-RS reporting setting is activated, the terminal device may determine, at the determined time of applying the MAC signaling, that the aperiodic CSI-RS reporting setting is activated, and the terminal device may report the CSI based on the aperiodic CSI-RS reporting setting. Alternatively, when the MAC signaling indicates that the semi-persistent SRS resource set is activated, the terminal device may consider that the configuration information of the semi-persistent SRS resource set takes effect at the determined time of applying the MAC signaling, and the terminal device may send the semi-persistent SRS based on the configuration information of the semi-persistent SRS resource set.

Optionally, the network device determines the time of applying the MAC signaling, so that the terminal device can perform the related operation at the time of applying the MAC signaling. For example, when the MAC signaling indicates that the aperiodic CSI-RS reporting setting is activated, the terminal device may determine, at the determined time of applying the MAC signaling, that the aperiodic CSI-RS reporting setting is activated. The network device may send the aperiodic CSI-RS resource at the determined time of applying the MAC signaling, or may send the aperiodic CSI-RS resource before the time of applying the MAC signaling, or may send the aperiodic CSI-RS resource after the time of applying the MAC signaling, as long as the terminal device can receive the aperiodic CSI-RS resource.

Based on the foregoing solution, if the first value in the DCI for scheduling the PDSCH indicates that the terminal device delays feedback of the HARQ-ACK, the terminal device may determine the time of applying the MAC signaling based on the foregoing solution. Therefore, the understandings of the network device and the terminal device on the time of applying the MAC signaling can be aligned, thereby improving communication performance.

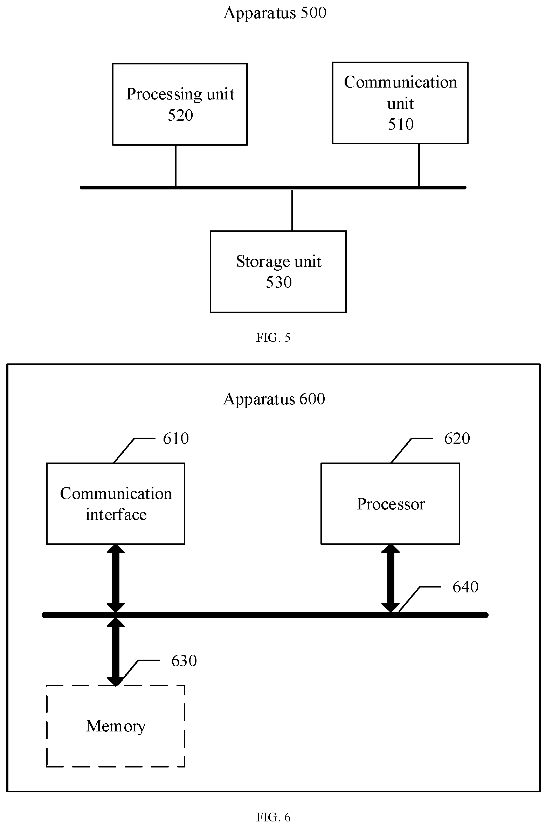

Based on a same technical concept as that of the foregoing communication method, as shown in FIG. 5, an apparatus 500 is provided. The apparatus 500 can perform steps performed by the terminal device side and the network device side in the foregoing method. To avoid repetition, details are not described herein again.

The apparatus 500 includes a communication unit 510 and a processing unit 520. Optionally, the apparatus 500 further includes a storage unit 530. The processing unit 520 may be separately connected to the storage unit 530 and the communication unit 510, and the storage unit 530 may alternatively be connected to the communication unit 510. The processing unit 520 may be integrated with the storage unit 530. The communication unit 510 may also be referred to as a transceiver, a transceiver machine, a transceiver apparatus, or the like. The processing unit 520 may also be referred to as a processor, a processing board, a processing module, a processing apparatus, or the like. Optionally, a component that is in the communication unit 510 and that is configured to implement a receiving function may be considered as a receiving unit, and a component that is in the communication unit 510 and that is configured to implement a sending function may be considered as a sending unit. In other words, the communication unit 510 includes the receiving unit and the sending unit. The communication unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the communication unit 510 is configured to perform a sending operation and a receiving operation on the terminal device side and the network device side in the foregoing method embodiment, and the processing unit 520 is configured to perform operations on the terminal device side and the network device side in the foregoing method embodiment other than the sending operation and the receiving operation. For example, in an implementation, the communication unit 510 is configured to perform a receiving operation on the terminal device side and the network device side or a sending operation on the terminal device side and the network device side in FIG. 2, and/or the communication unit 510 is further configured to perform other sending and receiving steps on the terminal device side and the network device side in embodiments of this application. The processing unit 520 is configured to perform processing steps on the terminal device side in FIG. 2, and/or the processing unit 520 is configured to perform other processing steps on the terminal device side and the network device side in embodiments of this application.

The storage unit 530 is configured to store a computer program.

For example, when the apparatus 500 is configured to perform the steps on the terminal device side, the communication unit 510 is configured to receive media access control MAC signaling, and the communication unit 510 is further configured to receive first indication information. The first indication information includes a first value for the apparatus to send hybrid automatic repeat request HARQ acknowledgment ACK information, and the first value indicates whether the apparatus delays feedback of the HARQ-ACK. The processing unit 520 is configured to determine a time of applying the MAC signaling.

In a possible implementation, when determining the time of applying the MAC signaling, the processing unit 520 is specifically configured to determine the time of applying the MAC signaling based on a second value. The second value is associated with at least one of a subcarrier spacing of a channel carrying the MAC signaling and a processing capability of the apparatus for the channel carrying the MAC signaling.

In a possible implementation, the communication unit 510 is further configured to receive a third value. When determining the time of applying the MAC signaling, the processing unit 520 is specifically configured to determine the time of applying the MAC signaling based on the third value.

In a possible implementation, the processing unit 520 is further configured to determine a first slot. The first slot is a 1st slot in which the apparatus is capable of sending the HARQ-ACK of the channel carrying the first indication information. When determining the time of applying the MAC signaling, the processing unit 520 is specifically configured to determine the time of applying the MAC signaling based on the first slot.

In a possible implementation, the communication unit 510 is further configured to receive second indication information. The second indication information includes a fourth value for the apparatus to send the HARQ-ACK, and the fourth value indicates that the terminal device does not delay feedback of the HARQ-ACK. When determining the time of applying the MAC signaling, the processing unit 520 is specifically configured to determine the time of applying the MAC signaling based on the fourth value.

In a possible implementation, when the MAC signaling indicates that a semi-persistent channel state reference signal resource CSI-RS resource set is activated, the processing unit 520 is further configured to: determine, based on the time of applying the MAC signaling, that configuration information of the semi-persistent CSI-RS resource set indicated by the MAC signaling takes effect, and the communication unit 510 is further configured to receive a semi-persistent CSI-RS based on the configuration information of the semi-persistent CSI-RS resource set.

In a possible implementation, when the MAC signaling indicates that a semi-persistent channel state information interference measurement CSI-IM resource set is activated, the processing unit 520 is further configured to: determine, based on the time of applying the MAC signaling, that configuration information of the semi-persistent CSI-IM resource set indicated by the MAC signaling takes effect, and the communication unit 510 is further configured to receive semi-persistent CSI-IM based on the configuration information of the semi-persistent CSI-IM resource set.

In a possible implementation, when the MAC signaling indicates that a semi-persistent uplink reference signal SRS resource set is activated, the processing unit 520 is further configured to determine, based on the time of applying the MAC signaling, that configuration information of the semi-persistent SRS resource set indicated by the MAC signaling takes effect, and the communication unit 510 is further configured to send a semi-persistent SRS based on the configuration information of the semi-persistent SRS resource set.

When the apparatus is a chip apparatus or circuit, the apparatus may include a communication unit and a processing unit. The communication unit may be an input/output circuit and/or a communication interface. The processing unit is an integrated processor, a microprocessor, or an integrated circuit. The communication unit may input data and output data, and the processing unit may determine the output data based on the input data. For example, the communication unit may input MAC signaling and first indication information. The processing unit may determine a time of applying the MAC signaling.

For example, when the apparatus 500 is configured to perform the steps on the network device side, the processing unit 520 is configured to generate media access control MAC signaling and first indication information. The first indication information includes a first value for the terminal device to send hybrid automatic repeat request HARQ acknowledgment ACK information, and the first value indicates whether the terminal device delays feedback of the HARQ-ACK. The communication unit 510 is configured to send the MAC signaling and the first indication information. The processing unit 520 is further configured to determine a time of applying the MAC signaling.

In a possible implementation, when determining the time of applying the MAC signaling, the processing unit 520 is specifically configured to determine the time of applying the MAC signaling based on a second value. The second value is associated with at least one of a subcarrier spacing of a channel carrying the MAC signaling and a processing capability of the terminal device for the channel carrying the MAC signaling.

In a possible implementation, the communication unit 510 is further configured to send a third value. When determining the time of applying the MAC signaling, the processing unit 520 is specifically configured to determine the time of applying the MAC signaling based on the third value.

In a possible implementation, the processing unit 520 is further configured to determine a first slot. The first slot is a 1st slot in which the terminal device is capable of sending the HARQ-ACK of the channel carrying the first indication information. When determining the time of applying the MAC signaling, the processing unit 520 is specifically configured to determine the time of applying the MAC signaling based on the first slot.

In a possible implementation, the communication unit 510 is further configured to send second indication information. The second indication information includes a fourth value for the terminal device to send the HARQ-ACK, and the fourth value indicates that the terminal device does not delay feedback of the HARQ-ACK. When determining the time of applying the MAC signaling, the processing unit 520 is specifically configured to determine the time of applying the MAC signaling based on the fourth value.

When the apparatus is a chip apparatus or circuit, the apparatus may include a communication unit and a processing unit. The communication unit may be an input/output circuit and/or a communication interface. The processing unit is an integrated processor, a microprocessor, or an integrated circuit. The communication unit may input data and output data, and the processing unit may determine the output data based on the input data. For example, the processing unit may generate MAC signaling and first indication information, and the processing unit may further determine indication information of the MAC signaling based on the MAC signaling and the first indication information. The communication unit may output the MAC signaling and the first indication information.

FIG. 6 shows an apparatus 600 with a communication function according to an embodiment of this application. The apparatus 600 is configured to implement a function of the terminal device or function of the network device in the foregoing method. When the apparatus is configured to implement the function of the terminal device in the foregoing method, the apparatus may be a terminal device, a chip with a similar function of the terminal device, or an apparatus that can be used in matching with the terminal device. When the apparatus is configured to implement the function of the network device in the foregoing method, the apparatus may be a network device, a chip with a similar function of the network device, or an apparatus that can be used in matching with the network device.

The apparatus 600 includes at least one processor 620, configured to implement the function of the terminal device or the function of the network device in the method provided in embodiments of this application. The apparatus 600 may further include a communication interface 610. In this embodiment of this application, the communication interface may be a transceiver, a circuit, a bus, a module, or a communication interface of another type, and is configured to communicate with another device by using a transmission medium. For example, the communication interface 610 is configured for means in the apparatus 600 to communicate with another device. The processor 620 may implement a function of the processing unit 520 shown in FIG. 5, and the communication interface 610 may implement a function of the communication unit 510 shown in FIG. 5.

The apparatus 600 may further include at least one memory 630, configured to store program instructions and/or data. The memory 630 is coupled to the processor 620. The coupling in this embodiment of this application may be an indirect coupling or a communication connection between apparatuses, units, or modules in an electrical form, a mechanical form, or another form, and is used for information exchange between the apparatuses, the units, or the modules. The processor 620 may cooperate with the memory 630. The processor 620 may execute the program instructions stored in the memory 630. At least one of the at least one memory may be included in the processor.

A specific connection medium between the communication interface 610, the processor 620, and the memory 630 is not limited in this embodiment of this application. In this embodiment of this application, in FIG. 6, the memory 630, the processor 620, and the communication interface 610 are connected through a bus 640. The bus is represented by a bold line in FIG. 6. A connection manner between other components is merely an example for description, and is not limited thereto. The bus may be classified into an address bus, a data bus, a control bus, and the like. For ease of indication, the bus is represented by only one bold line in FIG. 6. However, it does not indicate that there is only one bus or only one type of bus.

An embodiment of this application further provides a terminal device. The terminal device may be a terminal device or may be a circuit. The terminal device may be configured to perform an action performed by the terminal device in the foregoing method embodiment.

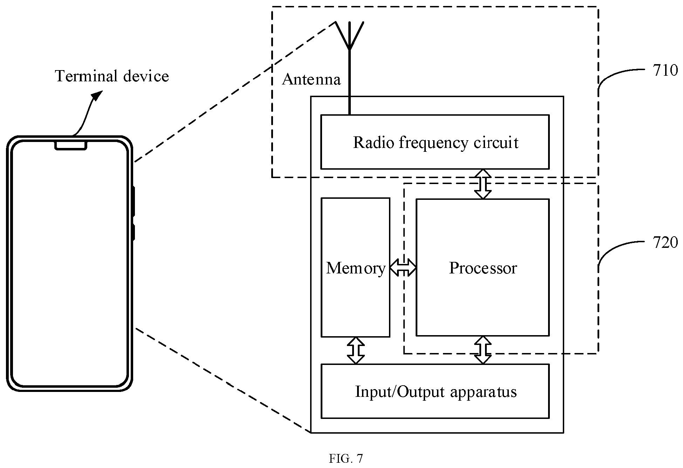

FIG. 7 is a simplified schematic diagram of a structure of a terminal device. For ease of understanding and convenience of figure illustration, an example in which the terminal device is a mobile phone is used in FIG. 7. As shown in FIG. 7, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The processor may execute the software program stored in the memory, so that the terminal device performs the steps performed by the terminal device in the foregoing method embodiment. Details are not described again. The antenna is mainly configured to receive/send a radio frequency signal in a form of an electromagnetic wave. The input/output apparatus, such as a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 7 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a communication unit of the terminal device, for example, a communication unit 710 shown in FIG. 7, and a processor that has a processing function is considered as a processing unit of the terminal device, for example, a processing unit 720 shown in FIG. 7.

In another form of this embodiment, a computer-readable storage medium is provided, where the computer-readable storage medium stores instructions. When the instructions are executed, the method on the terminal device side or the network device side in the foregoing method embodiment is performed.

In another form of this embodiment, a computer program product including instructions is provided. When the instructions are executed, the method on the terminal device side or the network device side in the foregoing method embodiment is performed.

In another form of this embodiment, a communication system is provided. The system may include at least one terminal device and at least one network device.

It should be understood that the processor mentioned in embodiments of the present invention may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or transistor logic device, a discrete hardware component, or the like. The general-purpose processor may be a microprocessor, or the processor may be any conventional processor or the like.

It may be further understood that the memory mentioned in embodiments of the present invention may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of the present invention.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. The invention is defined in the appended set of claims.

## Claims

1. A method for determining a time of applying media access control MAC signaling, comprising:
receiving (201), by a terminal device, first indication information from a network device, wherein the first indication information comprises a first value for the terminal device to send hybrid automatic repeat request HARQ acknowledgment ACK information, and wherein when the first value is an inapplicable value the network device indicates, in the first indication information, to the terminal device to delay feedback of the HARQ-ACK and wherein when the first value is an applicable value the network device indicates, in the first indication information, to the terminal device not to delay feedback of the HARQ-ACK,
receiving (202), by the terminal device, the media access control MAC signaling from the network device, and wherein the MAC signaling indicates the terminal device to perform a related operation;
and
determining (203), by the terminal device, the time of applying the MAC signaling, wherein when the first value in the first indication information indicates the terminal device not to delay feedback of the HARQ-ACK, the terminal device determines the time of applying the MAC signaling based on the first value and wherein when the first value in the first indication information indicates the terminal device to delay feedback of the HARQ-ACK the terminal device determines the time of applying the MAC signaling based on a second value, wherein the second value is associated with at least one of a subcarrier spacing of a channel carrying the MAC signaling and a processing capability of the terminal device for the channel carrying the MAC signaling, and wherein the second value is specified in a communication protocol or indicated by the network device.

2. The method according to claim 1, wherein a first slot is a 1st slot in which the terminal device is capable of sending the HARQ-ACK of the channel carrying the first indication information, and wherein the second value indicates the 1st slot, or indicates a slot after the 1st slot.

3. The method according to any one of claims 1 to 2, further comprising:
when the MAC signaling indicates that a semi-persistent channel state reference signal CSI-RS resource set is activated, determining, by the terminal device based on the time of applying the MAC signaling, that configuration information of the semi-persistent CSI-RS resource set indicated by the MAC signaling takes effect, and receiving, by the terminal device, a semi-persistent CSI-RS based on the configuration information of the semi-persistent CSI-RS.

4. The method according to any one of claims 1 to 3, further comprising:
when the MAC signaling indicates that a semi-persistent channel state information interference measurement CSI-IM resource set is activated, determining, by the terminal device based on the time of applying the MAC signaling, that configuration information of the semi-persistent CSI-IM resource set indicated by the MAC signaling takes effect, and receiving, by the terminal device, semi-persistent CSI-IM based on the configuration information of the semi-persistent CSI-IM resource set.

5. The method according to any one of claims 1 to 4, further comprising:
when the MAC signaling indicates that a semi-persistent uplink sounding reference signal SRS resource set is activated, determining, by the terminal device based on the time of applying the MAC signaling, that configuration information of the semi-persistent SRS resource set indicated by the MAC signaling takes effect, and sending, by the terminal device, a semi-persistent SRS based on the configuration information of the semi-persistent SRS resource set.

6. A method for determining a time of applying media access control MAC signaling, comprising:
sending (201), by a network device, first indication information to a terminal device, wherein the first indication information comprises a first value for the terminal device to send hybrid automatic repeat request HARQ acknowledgment ACK information, and wherein when the first value is an inapplicable value the network device indicates, in the first indication information, to the terminal device to delay feedback of the HARQ-ACK and wherein when the first value is an applicable value the network device indicates, in the first indication information, to the terminal device not to delay feedback of the HARQ-ACK,
sending (202), by a network device, the media access control MAC signaling to a terminal device, and wherein the MAC signaling indicates the terminal device to perform a related operation; and
determining (203), by the network device, the time of applying the MAC signaling, wherein when the first value in the first indication information indicates the terminal device not to delay feedback of the HARQ-ACK, the time of applying the MAC signaling by the terminal device is based on the first value and wherein when the first value in the first indication information indicates the terminal device to delay feedback of the HARQ-ACK the time of applying the MAC signaling by the terminal device is based on a second value, wherein the second value is associated with at least one of a subcarrier spacing of a channel carrying the MAC signaling and a processing capability of the terminal device for the channel carrying the MAC signaling, and wherein the second value is specified in a communication protocol or indicated by the network device.

7. The method according to claim 9, wherein a first slot is a 1st slot in which the terminal device is capable of sending the HARQ-ACK of the channel carrying the first indication information, and
wherein the second value indicates the 1st slot, or indicates a slot after the 1st slot.

8. A communication apparatus, comprising a module to perform the method according to any one of claims 1 to 7.

## Patentansprüche

1. Verfahren zum Bestimmen eines Zeitpunkts zum Anwenden von Signalisierung zur Medienzugriffssteuerung, MAC-Signalisierung, umfassend:
Empfangen (201), durch ein Endgerät, von ersten Angabeinformationen von einem Netzgerät, wobei die ersten Angabeinformationen einen ersten Wert für das Endgerät umfassen, um hybride automatische Wiederholungsanforderungsbestätigungsinformationen, HARQ-ACK-Informationen, zu senden, und wobei, wenn der erste Wert ein nicht anwendbarer Wert ist, das Netzgerät dem Endgerät in den ersten Angabeinformationen angibt, eine Rückmeldung der HARQ-ACK zu verzögern, und wobei, wenn der erste Wert ein anwendbarer Wert ist, das Netzgerät dem Endgerät in den ersten Angabeinformationen angibt, eine Rückmeldung der HARQ-ACK nicht zu verzögern;
Empfangen (202), durch das Endgerät, der Signalisierung zur Medienzugriffssteuerung, MAC-Signalisierung, von dem Netzgerät, wobei die MAC-Signalisierung dem Endgerät angibt, einen zugehörigen Vorgang durchzuführen;
und
Bestimmen (203), durch das Endgerät, des Zeitpunkts zum Anwenden der MAC-Signalisierung, wobei, wenn der erste Wert in den ersten Angabeinformationen dem Endgerät angibt, eine Rückmeldung der HARQ-ACK nicht zu verzögern, das Endgerät den Zeitpunkt zum Anwenden der MAC-Signalisierung basierend auf dem ersten Wert bestimmt, und wobei, wenn der erste Wert in den ersten Angabeinformationen dem Endgerät angibt, eine Rückmeldung der HARQ-ACK zu verzögern, das Endgerät den Zeitpunkt zum Anwenden der MAC-Signalisierung basierend auf einem zweiten Wert bestimmt, wobei der zweite Wert mindestens einem von einem Unterträgerabstand eines Kanals, der die MAC-Signalisierung enthält, und einer Verarbeitungsfähigkeit des Endgeräts für den Kanal, der die MAC-Signalisierung enthält, zugeordnet ist und wobei der zweite Wert in einem Kommunikationsprotokoll definiert oder durch das Netzgerät angegeben wird.

2. Verfahren nach Anspruch 1, wobei es sich bei einem ersten Zeitschlitz um einen 1. Zeitschlitz handelt, in dem das Endgerät in der Lage ist, die HARQ-ACK des Kanals, der die ersten Angabeinformationen enthält, zu senden; und wobei der zweite Wert den 1. Zeitschlitz angibt oder einen Zeitschlitz nach dem 1. Zeitschlitz angibt.

3. Verfahren nach einem der Ansprüche 1 bis 2, ferner umfassend: wenn die MAC-Signalisierung angibt, dass ein semi-persistenter Kanalzustandsreferenzsignal-Ressourcensatz, CSI-RS-Ressourcensatz, aktiviert ist, Bestimmen, durch das Endgerät basierend auf dem Zeitpunkt zum Anwenden der MAC-Signalisierung, dass die durch die MAC-Signalisierung angegebenen Konfigurationsinformationen des semi-persistenten CSI-RS-Ressourcensatzes wirksam werden, und Empfangen, durch das Endgerät, eines semi-persistenten CSI-RS basierend auf den Konfigurationsinformationen des semi-persistenten CSI-RS.

4. Verfahren nach einem der Ansprüche 1 bis 3, ferner umfassend: wenn die MAC-Signalisierung angibt, dass ein semi-persistenter Kanalzustandsinformationsinterferenzmessung-Ressourcensatz, CSI-IM-Ressourcensatz, aktiviert ist, Bestimmen, durch das Endgerät basierend auf dem Zeitpunkt zum Anwenden der MAC-Signalisierung, dass die durch die MAC-Signalisierung angegebenen Konfigurationsinformationen des semi-persistenten CSI-IM-Ressourcensatzes wirksam werden, und Empfangen, durch das Endgerät, eines semi-persistenten CSI-IM basierend auf den Konfigurationsinformationen des semi-persistenten CSI-IM-Ressourcensatzes.

5. Verfahren nach einem der Ansprüche 1 bis 4, ferner umfassend: wenn die MAC-Signalisierung angibt, dass ein semi-persistenter Uplinksondierungsreferenzsignal-Ressourcensatz, SRS-Ressourcensatz, aktiviert ist, Bestimmen, durch das Endgerät basierend auf dem Zeitpunkt zum Anwenden der MAC-Signalisierung, dass die durch die MAC-Signalisierung angegebenen Konfigurationsinformationen des semi-persistenten SRS-Ressourcensatzes wirksam werden, und Senden, durch das Endgerät, eines semi-persistenten SRS basierend auf den Konfigurationsinformationen des semi-persistenten SRS-Ressourcensatzes.

6. Verfahren zum Bestimmen eines Zeitpunkts zum Anwenden von Signalisierung zur Medienzugriffssteuerung, MAC-Signalisierung, umfassend:
Senden (201), durch ein Netzgerät, von ersten Angabeinformationen an ein Endgerät, wobei die ersten Angabeinformationen einen ersten Wert für das Endgerät umfassen, um hybride automatische Wiederholungsanforderungsbestätigungsinformationen, HARQ-ACK-Informationen, zu senden, und wobei, wenn der erste Wert ein nicht anwendbarer Wert ist, das Netzgerät dem Endgerät in den ersten Angabeinformationen angibt, eine Rückmeldung der HARQ-ACK zu verzögern, und wobei, wenn der erste Wert ein anwendbarer Wert ist, das Netzgerät dem Endgerät in den ersten Angabeinformationen angibt, eine Rückmeldung der HARQ-ACK nicht zu verzögern;
Senden (202), durch ein Netzgerät, der Signalisierung zur Medienzugriffssteuerung, MAC-Signalisierung, an ein Endgerät, wobei die MAC-Signalisierung dem Endgerät angibt, einen zugehörigen Vorgang durchzuführen; und
Bestimmen (203), durch das Netzgerät, des Zeitpunkts zum Anwenden der MAC-Signalisierung, wobei, wenn der erste Wert in den ersten Angabeinformationen dem Endgerät angibt, eine Rückmeldung der HARQ-ACK nicht zu verzögern, der Zeitpunkt zum Anwenden der MAC-Signalisierung durch das Endgerät auf dem ersten Wert basiert, und wobei, wenn der erste Wert in den ersten Angabeinformationen dem Endgerät angibt, eine Rückmeldung der HARQ-ACK zu verzögern, der Zeitpunkt zum Anwenden der MAC-Signalisierung durch das Endgerät auf einem zweiten Wert basiert, wobei der zweite Wert mindestens einem von einem Unterträgerabstand eines Kanals, der die MAC-Signalisierung enthält, und einer Verarbeitungsfähigkeit des Endgeräts für den Kanal, der die MAC-Signalisierung enthält, zugeordnet ist und wobei der zweite Wert in einem Kommunikationsprotokoll definiert oder durch das Netzgerät angegeben wird.

7. Verfahren nach Anspruch 9, wobei es sich bei einem ersten Zeitschlitz um einen 1. Zeitschlitz handelt, in dem das Endgerät in der Lage ist, die HARQ-ACK des Kanals, der die ersten Angabeinformationen enthält, zu senden; und
wobei der zweite Wert den 1. Zeitschlitz angibt oder einen Zeitschlitz nach dem 1. Zeitschlitz angibt.

8. Kommunikationsvorrichtung, umfassend ein Modul, um das Verfahren nach einem der Ansprüche 1 bis 7 durchzuführen.

## Revendications

1. Procédé de détermination d'un moment d'application de signalisation de commande d'accès au support MAC, comprenant :
la réception (201), par un dispositif terminal, de premières informations d'indication à partir d'un dispositif réseau, dans lequel les premières informations d'indication comprennent une première valeur pour que le dispositif terminal envoie des informations d'accusé de réception ACK de requête de répétition automatique hybride HARQ, et dans lequel lorsque la première valeur est une valeur inapplicable le dispositif réseau indique, dans les premières informations d'indication, au dispositif terminal de retarder le retour d'informations du HARQ-ACK et dans lequel lorsque la première valeur est une valeur applicable le dispositif réseau indique, dans les premières informations d'indication, au dispositif terminal de ne pas retarder le retour d'informations du HARQ-ACK ;
la réception (202), par le dispositif terminal, de la signalisation de commande d'accès au support MAC à partir du dispositif réseau, et dans lequel la signalisation MAC indique au dispositif terminal de réaliser une opération connexe ;
et
la détermination (203), par le dispositif terminal, du moment d'application de la signalisation MAC, dans lequel lorsque la première valeur dans les premières informations d'indication indique au dispositif terminal de ne pas retarder le retour d'informations du HARQ-ACK, le dispositif terminal détermine le moment d'application de la signalisation MAC sur la base de la première valeur et dans lequel lorsque la première valeur dans les premières informations d'indication indique au dispositif terminal de retarder le retour d'informations du HARQ-ACK le dispositif terminal détermine le moment d'application de la signalisation MAC sur la base d'une seconde valeur, dans lequel la seconde valeur est associée à au moins l'un d'un espacement de sous-porteuse d'un canal transportant la signalisation MAC et d'une capacité de traitement du dispositif terminal pour le canal transportant la signalisation MAC, et dans lequel la seconde valeur est spécifiée dans un protocole de communication ou indiquée par le dispositif réseau.

2. Procédé selon la revendication 1, dans lequel un premier emplacement est un 1er emplacement dans lequel le dispositif terminal est capable d'envoyer le HARQ-ACK du canal transportant les premières informations d'indication ; et dans lequel la seconde valeur indique le 1er emplacement, ou indique un emplacement après le 1er emplacement.

3. Procédé selon l'une quelconque des revendications 1 et 2, comprenant en outre :
lorsque la signalisation MAC indique qu'un ensemble de ressources de signal de référence d'état de canal CSI-RS semi-persistant est activé, la détermination, par le dispositif terminal sur la base du moment d'application de la signalisation MAC, que les informations de configuration de l'ensemble de ressources CSI-RS semi-persistant indiqué par la signalisation MAC prennent effet, et la réception, par le dispositif terminal, d'un CSI-RS semi-persistant sur la base des informations de configuration du CSI-RS semi-persistant.

4. Procédé selon l'une quelconque des revendications 1 à 3, comprenant en outre :
lorsque la signalisation MAC indique qu'un ensemble de ressources de mesure d'interférence d'informations d'état de canal CSI-IM semi-persistant est activé, la détermination, par le dispositif terminal sur la base du moment d'application de la signalisation MAC, que les informations de configuration de l'ensemble de ressources CSI-IM semi-persistant indiqué par la signalisation MAC prennent effet, et la réception, par le dispositif terminal, d'un CSI-IM semi-persistant sur la base des informations de configuration de l'ensemble de ressources de CSI-IM semi-persistant.

5. Procédé selon l'une quelconque des revendications 1 à 4, comprenant en outre :
lorsque la signalisation MAC indique qu'un ensemble de ressources de signal de référence de sonde de liaison montante SRS semi-persistant est activé, la détermination, par le dispositif terminal sur la base du moment d'application de la signalisation MAC, que les informations de configuration de l'ensemble de ressources SRS semi-persistant indiqué par la signalisation MAC prennent effet, et l'envoi, par le dispositif terminal, d'un SRS semi-persistant sur la base des informations de configuration de l'ensemble de ressources de SRS semi-persistant.

6. Procédé de détermination d'un moment d'application de signalisation de commande d'accès au support MAC, comprenant :
l'envoi (201), par un dispositif terminal, de premières informations d'indication à un dispositif réseau, dans lequel les premières informations d'indication comprennent une première valeur pour que le dispositif terminal envoie des informations d'accusé de réception ACK de requête de répétition automatique hybride HARQ, et dans lequel lorsque la première valeur est une valeur inapplicable le dispositif réseau indique, dans les premières informations d'indication, au dispositif terminal de retarder le retour d'informations du HARQ-ACK et dans lequel lorsque la première valeur est une valeur applicable le dispositif réseau indique, dans les premières informations d'indication, au dispositif terminal de ne pas retarder le retour d'informations du HARQ-ACK ;
l'envoi (202), par un dispositif réseau, de la signalisation de commande d'accès au support MAC à un dispositif terminal, et dans lequel la signalisation MAC indique au dispositif terminal de réaliser une opération connexe ; et
la détermination (203), par le dispositif réseau, du moment d'application de la signalisation MAC, dans lequel lorsque la première valeur dans les premières informations d'indication indique au dispositif terminal de ne pas retarder le retour d'informations du HARQ-ACK, le moment d'application de la signalisation MAC par le dispositif terminal sur la base de la première valeur et dans lequel lorsque la première valeur dans les premières informations d'indication indique au dispositif terminal de retarder le retour d'informations du HARQ-ACK le moment d'application de la signalisation MAC par le dispositif terminal est basé sur une seconde valeur, dans lequel la seconde valeur est associée à au moins l'un d'un espacement de sous-porteuse d'un canal transportant la signalisation MAC et d'une capacité de traitement du dispositif terminal pour le canal transportant la signalisation MAC, et dans lequel la seconde valeur est spécifiée dans un protocole de communication ou indiquée par le dispositif réseau.

7. Procédé selon la revendication 9, dans lequel un premier emplacement est un 1er emplacement dans lequel le dispositif terminal est capable d'envoyer le HARQ-ACK du canal transportant les premières informations d'indication ; et
dans lequel la seconde valeur indique le 1er emplacement, ou indique un emplacement après le 1er emplacement.

8. Appareil de communication, comprenant un module pour réaliser le procédé selon l'une quelconque des revendications 1 à 7.
